# EUROPEAN PATENT APPLICATION

(11) **EP 4 552 754 A1**
(43) Date of publication of application: **14.05.2025**
(21) Application number: 23937735.1
(22) Date of filing: 12.10.2023
(51) Int. Cl.: B07C 5/342, G06T 7/00, G06N 3/08, G06N 20/00

(54) **WASTE SORTING SYSTEM CONSIDERING CHARACTERISTICS OF EACH WASTE SORTING FACILITY**

(30) Priority: 27.09.2023 KR 20230129916
(71) Applicant: Aetech Corporation, Seo-gu Incheon 22689 (KR)
(72) Inventor: PARK, Tae Hyung, Gangnam-gu Seou 06236 (KR); LEE, Do Kyung, Geumcheon-gu Seoul 08520 (KR)
(74) Representative: Jung, Minkyu
(86) International application number: PCT/KR2023/015661
(87) International publication number: WO 2025/070857

(57) **Abstract**

The present invention relates to a waste sorting system considering the characteristics of each waste disposal facility, comprising: a data preprocessing unit that generates Training Data 2 by correcting Image 1 using information of Image 2 acquired from a new waste disposal facility and information of Image 1; a model learning part that trains the artificial intelligence model using Training Data 2; and a target object selection unit that selects the target object to be sorted from among wastes from new waste disposal facility using the artificial intelligence model as test data based on information of Image 2, in a waste sorting system considering the characteristics of each waste disposal facility based on an artificial intelligence model trained to sort the waste using Training Data 1 based information of Image 1 from an existing waste disposal facility.

## Description

### Technical Field

The present invention relates to a waste sorting system using artificial intelligence and robots, and more specifically, a waste sorting system considering the characteristics of each waste disposal facility with different environmental characteristics.

### Background Art

A large amount of waste is discharged from homes, factories, restaurants, etc. on a daily basis, and many people separate and throw away food waste among general waste, recyclable waste, and food waste.

However, the recyclable waste is still being discharged mixed with general waste, and manpower is mobilized in separating it.

In addition, companies that use PET bottles or glass bottles are currently importing recyclable waste from foreign countries because recyclable waste is discarded as general waste without being properly separated. In S. Korea, various inventions are being made to solve these problems, and in particular, methods, devices, and systems for separating PET bottles are being applied for patents and registered.

For example, Korean Patent Publication No. 10-2023-0084017 "A recyclable waste sorting system, method, and program using an artificial intelligence model" relates to a recyclable waste sorting device. The system captures the images of waste on a conveyor through one or more cameras in a preset sorting area, analyzes the captured images based on an artificial intelligence model to determine the type of each waste on the conveyor, and then analyzes the captured images using an artificial intelligence model to determine the type of waste on the conveyor.

Meanwhile, the waste image data, which is the data for training the artificial intelligence model, may differ for each waste disposal facility due to environmental differences between facilities. In other words, there was a problem wherein an error occurred when an artificial intelligence model trained with the waste image data from waste disposal facility A was used to sort the waste at waste disposal facility B.

### Technical Problem

The technical problem underlying the present invention is to provide a waste sorting system considering the characteristics of each waste disposal facility, which may use an artificial intelligence model trained with the waste image data acquired from an existing waste disposal facility with environmental differences in a new waste disposal facility.

### Technical Solution

In order to solve this problem, In a waste sorting system considering the characteristics of each waste disposal facility based on the artificial intelligence model trained to sort waste using Training Data 1 based on information of Image 1 from an existing waste sorting facility according to an embodiment of the present invention comprises: a data preprocessing unit that corrects Image 1 using information of Image 2 acquired from a new waste disposal facility and information of Image 1 to generate Training Data 2; a model training unit that trains the artificial intelligence model using Training Data 2; and a target object selection unit that selects the target object to be sorted from among the waste from a new waste disposal facility using the artificial intelligence model as test data based on information of Image 2.

The information of Image 1 and the information of Image 2 may be different due to environmental differences of the waste disposal facility and the performance of the sensor, and the information of Image may include color space, resolution, bit depth, metadata, density, and transmittance as components.

The data preprocessing unit may generate Training Data 2 by correcting Image 1 using at least two components among the information of Image.

The correction of Image 1 and the retraining of the artificial intelligence model may be iterated until the sorting error rate of the target object is lower than a preset standard through the artificial intelligence model.

When applying the artificial intelligence model to another new waste disposal facility after identifying the importance of the components of the information of Image that affect the sorting result of the target object through the iteration, the data may be preprocessed by giving priority to the components with high importance.

In addition to the technical tasks of the present invention mentioned above, other features and advantages of the present invention will be described below, or will be clearly understood by those skilled in the art from such description and explanation.

### Advantageous Effects

According to the present invention as described above, the following effects are achieved.

The present invention may improve the waste sorting performance of a new waste disposal facility by correcting the training data of an artificial intelligence model so that an artificial intelligence model used in an existing waste disposal facility with a different environment may be used in a new waste disposal facility.

In addition, other features and advantages of the present invention may be newly identified through the embodiments of the present invention.

### BRIEF DESCRIPTION OF THE DRAWINGS

FIG. 1 is a schematic diagram of the waste sorting system using an artificial intelligence-based robot arm to which a waste sorting system considering the characteristics of each waste disposal facility according to one embodiment of the present invention is applied.
FIG. 2 is a schematic diagram of the waste sorting system considering the characteristics of each waste disposal facility according to one embodiment of the present invention.
FIG. 3 is a diagram that explains a process of correcting information of Image 1 using information of Image 1 from an existing waste disposal facility and information of Image 2 from a new waste disposal facility.
FIG. 4 is a flowchart that explains the process of sorting the target object through correction of image according to one embodiment of the present invention.
FIG. 5 is a diagram that explains the process of performing the correction of Image 1 until the sorting error rate of the target object is below a preset standard through iteration according to one embodiment of the present invention.

### DETAILED DESCRIPTION

In the present specification, in adding reference numerals for elements in each drawing, it should be noted that like reference numerals already used to denote like elements in other drawings are used for elements wherever possible.

The terms described in the present specification should be understood as follows.

The singular forms are intended to include the plural forms as well, unless the context clearly indicates otherwise, and the scope of right should not be limited by these terms.

It should be understood that the terms "comprise" or "have" do not preclude the presence or addition of one or more other features, integers, steps, operations, components, elements, or combinations thereof.

As used herein, the term "waste" includes plastics, PET bottles, glass bottles, glass, paper, Styrofoam, general waste, and industrial waste.

As used herein, the original image means the image collected, not the image generated by a generative model. More specifically, the original image may be the image collected by a sensor or the image input externally.

As used herein, the target object means an object to be sorted among various types of objects such as waste.

Hereinafter, preferred embodiments of the present invention designed to solve the tasks will be described in detail with reference to the accompanying drawings.

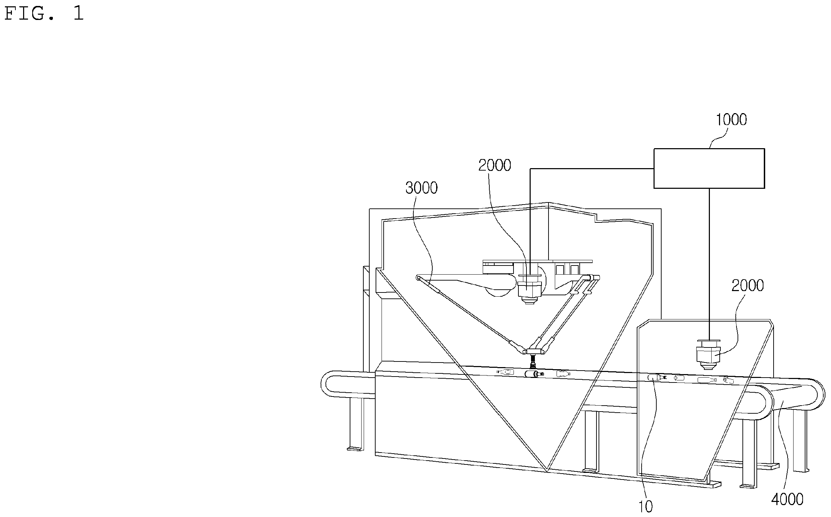

FIG. 1 is a schematic diagram of the waste sorting system using an AI-based robot arm to which a waste sorting system considering the characteristics of each facility according to one embodiment of the present invention is applied.

The waste sorting system using an AI-based robot arm may include the waste sorting system 1000 considering the characteristics of each facility according to the present invention, the vision camera 2000, and the robot arm 3000.

The object 10 such as the waste moving on a conveyor belt 4000 is collected through the vision camera 2000, and the target object to be sorted is selected through the waste sorting system 1000 considering the characteristics of each facility according to the present invention, and then the target object may be sorted through the robot arm 3000.

The waste sorting system 1000 considering the characteristics of each facility according to the present invention may select the target objects to be sorted among the wastes 10 through the artificial intelligence model used in an existing waste disposal facility.

In general, when waste such as plastics, PET bottles, and glass bottles arrive at a waste disposal facility, they often arrive in a distorted form, such as a crushed or damaged form, not in a complete form.

The artificial intelligence model used to sort waste in an existing waste disposal facility uses the waste image from an existing waste disposal facility as training data, so the sorting performance is good in an existing waste disposal facility, but there is a problem that the sorting performance is poor when the artificial intelligence model is applied to a new waste disposal facility with environmental differences.

The waste sorting system 1000 considering the characteristics of each waste disposal facility according to the present invention may improve the artificial intelligence model, so that the artificial intelligence model used in an existing waste disposal facility with different environment may be used in a new waste disposal facility.

For the equipment for collecting the images of object 10 used in the present invention, various sensors may be used in addition to the vision camera 2000. For instance, an optical sensor, an infrared sensor, an ultrasonic sensor, a metal detector, an x-ray sensor, a radar sensor, etc. may be used.

The robot 3000 is a robot sorting the target objects moving on a conveyor belt. In addition to suction robot arm, gripper robot arm with various grip forms may be used.

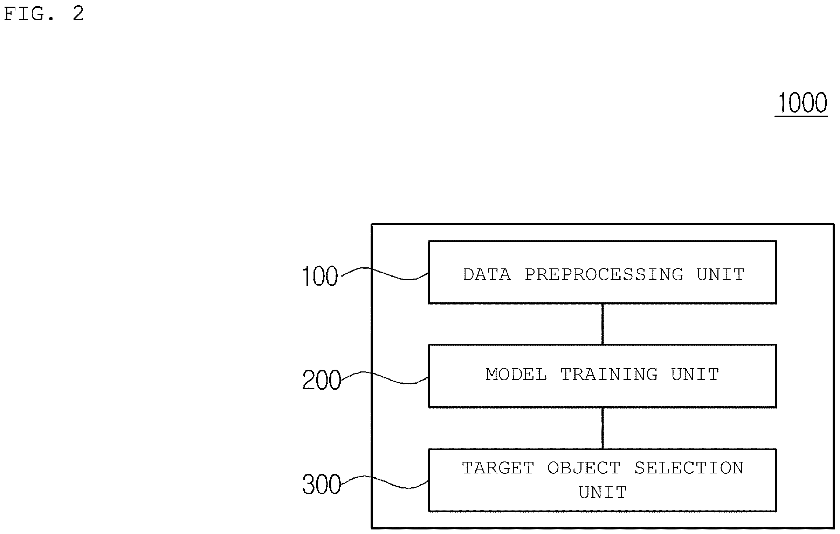

FIG. 2 is a schematic configuration diagram of the waste sorting system considering the characteristics of each waste disposal facility according to one embodiment of the present invention.

Referring to FIG. 2, the waste sorting system 1000 considering the characteristics of each waste disposal facility according to one embodiment of the present invention may include the data preprocessing unit 100, the model training unit 200, and the target object selection unit 300.

The data preprocessing unit 100 may correct Image 1 using the Training Data 1 based on information of Image 1 from an existing waste disposal facility and information of Image 2 from a new waste disposal facility to generate Training Data 2.

The information of Image 1 and the information of Image 2 are different due to the differences in environment and sensor performance between an existing and a new waste sorting facility.

At this time, the information of Image may include color space, resolution, bit depth, metadata, density, and transmittance as components.

For instance, the data preprocessing unit 100 may convert all images to a specific color space such as RGB or HSV and resize them to a fixed resolution to consistently correct the data.

In addition, since the brightness or color information of the image may be different if the bit depth is different, the bit depth of image may be matched to a specific value or normalized for correction.

In addition, the metadata of image may include information such as the shooting environment, camera settings, date and time, etc., and this information may be used to identify the filter or correction applied to the image, and to reverse correction when necessary.

In addition, the brightness or transparency of the image may vary depending on the density or transmittance of the waste, and this may be corrected using the histogram equalization or algorithm of the image.

Histogram Equalization is an art for improving the brightness contrast of an image, and it may smooth the pixel value distribution of the image overall, which may improve the brightness contrast of the image and make details more visible, especially in dark or bright areas.

Adaptive Histogram Equalization is a method of adjusting the brightness contrast considering the local area of the image unlike basic histogram equalization.

Data preprocessing unit 100 may use methods such as gain-offset correction, color correction, white balance correction, and gamma correction.

Gain-Offset Correction is a method of adjusting the brightness and contrast of the image by applying gain and offset values to specific pixel values. Color Correction is an art for correcting color distortion of image that occurs due to various reasons. White Balance Correction is a method for correcting the change of color that occurs due to the characteristics of camera sensors, lighting conditions, etc. Gamma Correction is a method of applying nonlinear transformation of pixel values to adjust the contrast of image.

The data preprocessing unit 100 may correct Image 1 using at least two or more components of information of Image to generate Training Data 2.

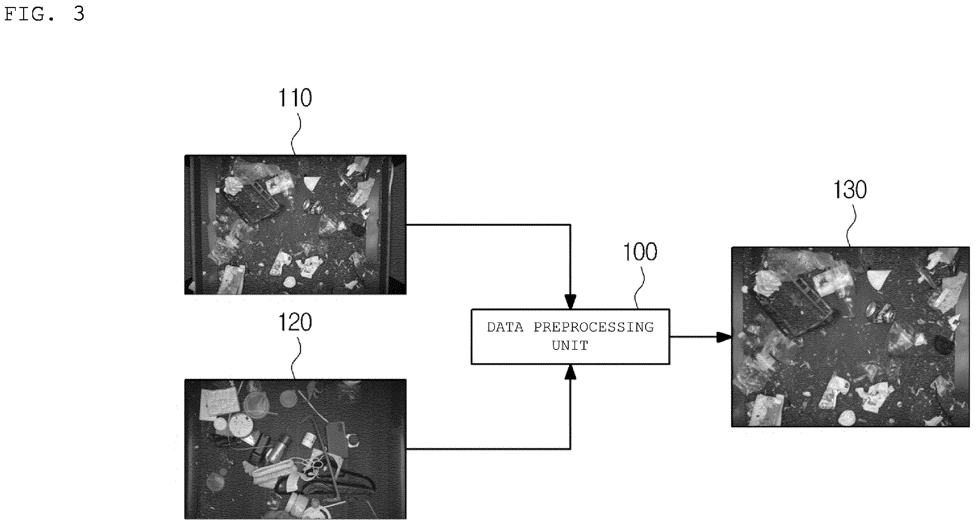

FIG. 3 is a diagram that explains the process of correcting information of Image 1 using information of Image 1 from an existing waste disposal facility and information of Image 2 from a new waste disposal facility.

Referring to FIG. 3, Image 1 110 is an image acquired from an existing waste disposal facility, and Image 2 120 is an image acquired from a new waste disposal facility. The data preprocessing unit 100 according to one embodiment of the present invention may correct Image 1 110 using Image 1 110 and the color space, resolution, and transmittance of Image 1 110 to generate Training Data 2 through the newly corrected image 130.

The model training unit 200 may train the artificial intelligence model used in an existing waste disposal facility using Training Data 2.

The target object selection unit 300 may select the target object to be sorted as the test data based on information of Image 2 acquired from a new waste disposal facility using the artificial intelligence model trained with Training Data 2.

For the artificial intelligence model, deep learning or neural network may be used. The models of the neural network may include various types of models such as CNN (Convolution Neural Network), R-CNN (Region with Convolution Neural Network), RPN (Region Proposal Network), RNN (Recurrent Neural Network), S-DNN (Stacking-based deep Neural Network), S-SDNN (State-Space Dynamic Neural Network), Deconvolution Network, DBN (Deep Belief Network), RBM (Restrcted Boltzman Machine), Fully Convolutional Network, LSTM (Long Short-Term Memory) Network, Classification Network, etc., but not limited to these if they are the artificial intelligence models that may determine target objects to be sorted by using waste image data.

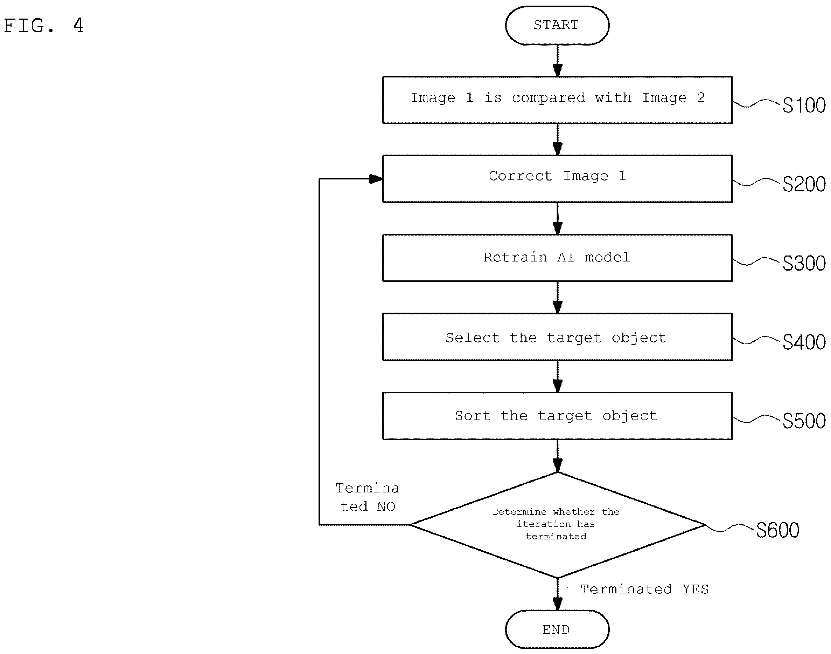

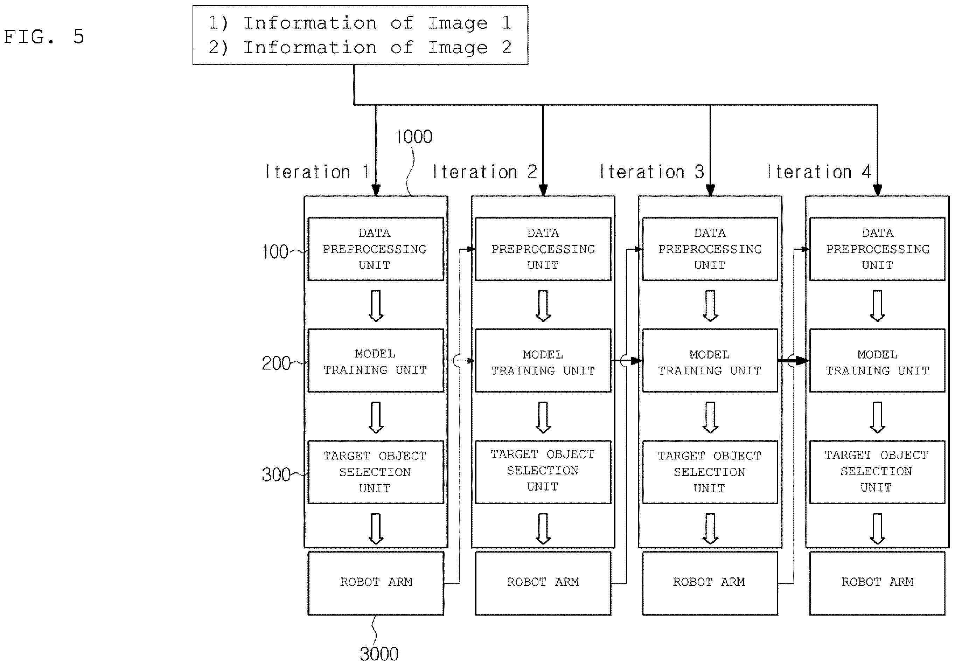

FIG. 4 is a flowchart that explains the process of sorting target objects through the correction of image according to one embodiment of the present invention, and FIG. 5 is a diagram that explains the process of performing the correction of Image 1 until the sorting error rate of the target object is lower than the preset standard through iteration according to one embodiment of the present invention.

Referring to FIGS. 4 and 5, the waste sorting system 1000 considering the characteristics of each waste disposal facility according to one embodiment of the present invention may perform iteration through the step S100 wherein Image 1 acquired from an existing waste disposal facility is compared with Image 2 acquired from a new waste disposal facility; the step S200 wherein the data preprocessing unit 100 compares Image 1 and Image 2 to correct Image 1 to generate Training Data 2; the step S300 wherein the artificial intelligence model used in an existing waste disposal facility is trained using Training Data 2 through a sorting model training unit 200; the step S400 wherein the target object is selected in a new waste disposal facility using an artificial intelligence model through the target object selection unit 300; and the step S500 wherein the target object is sorted using the robot arm 3000.

At this time, for the iteration termination S600, the correction of Image 1 and the retraining of AI model may be iterated until the sorting error rate of the target object is below the preset standard.

If the sorting error rate of the target object of Iteration 1 is below the preset standard, Iteration 2 is performed by changing the combination of the information of Image components. If the sorting error rate of the target object exceeds the preset standard through iteration, iterations may be reduced by applying the combination of the information of Image components used at that time to another new waste disposal facility.

In addition, when applying the artificial intelligence model to another new waste disposal facility after identifying the importance of the components of the information of Image that affect the sorting result of the target object through iteration, the data may be preprocessed by giving priority to the components with high importance.

The system or apparatus described above may be implemented as hardware components, or a combination of hardware components and software components. For example, the system or devices described above (e.g., a processor, a controller, an arithmetic logic part (ALU), a digital signal processor, a microcomputer, a field programmable gate array (FPGA), a programmable logic part (PLU), a microprocessor, or any other device capable of executing instructions and responding to them) may be implemented using one or more general-purpose computers or special-purpose computers. The processing device may execute an operating system (OS) and one or more software applications running on the operating system. In addition, the processing device may access, store, manipulate, process, and generate data in response to the execution of the software. For ease of understanding, the processing device is sometimes described as being used alone, but persons having ordinary skill in the art will appreciate that the processing device may include multiple processing elements and/or multiple types of processing elements. For example, the processing device may include multiple processors, or one processor and one controller. Also, other processing configurations, such as parallel processors, are possible.

The software may include a computer program, code, instructions, or a combination of one or more of these, and may configure a processing device to operate as desired or command the processing device, either independently or collectively. The software and/or data may be embodied in any type of machine, component, physical device, virtual equipment, computer storage medium, or device, for being construed by the processing device or for providing instructions or data to the processing device. The software may be distributed over networked computer systems and stored or executed in a distributed manner. The software and data may be stored on one or more computer-readable recording media.

The method according to the embodiments of present invention may be implemented in the form of program instructions that may be executed by various computer means and recorded on a computer-readable medium. The computer-readable medium may include program instructions, data files, data structures, etc., alone or in combination. The medium may be a computer-executable program that is continuously stored or temporarily stored for execution or download. In addition, the medium may be a variety of recording means or storage means in the form of a single or multiple hardware combination, and it is not limited to a medium directly connected to a computer system, and may also be distributed over the network. For example, the medium may include magnetic media (e.g., hard disks, floppy disks, and magnetic tapes), optical recording media (e.g., CD-ROMs and DVDs), magneto-optical media (e.g., floptical disks), ROMs, RAMs, and flash memories, etc., configured to store program instructions. In addition, for examples of other media, the media may include recording media or storage media managed by app stores that distribute applications or other sites, servers, etc. that supply or distribute various software. Examples of program instructions include not only machine language codes generated by a compiler, but also high-level language codes that may be executed by a computer using an interpreter, etc.

It will be apparent to persons having skill in the art that the present invention described above is not limited to the above-described embodiments and the attached drawings, and that substitutions, modifications, and changes may be made in various ways without departing from the spirit and scope of the present invention.

## Claims

1. In a waste sorting system considering the characteristics of each waste disposal facility based on the artificial intelligence model trained to sort waste using Training Data 1 based on information of Image 1 from an existing waste sorting facility, the improvement which comprises:
a data preprocessing unit that corrects Image 1 using information of Image 2 acquired from a new waste disposal facility and information of Image 1 to generate Training Data 2;
a model training unit that trains the artificial intelligence model using Training Data 2;
a target object selection unit that selects the target object to be sorted from wastes of a new waste disposal facility using the artificial intelligence model as test data based on information of Image 2.

2. The system of claim 1, wherein the information of Image 1 and the information of Image 2 are different due to differences in the environment of the waste disposal facility and the performance of the sensor, and the information of Image includes color space, resolution, bit depth, metadata, density, and transmittance as components.

3. The system of claim 2, wherein the data preprocessing unit that corrects Image 1 using at least two or more components of the information of Image to generate Training Data 2.

4. The system of claim 3, wherein the correction of Image 1 and the retraining of the artificial intelligence model are iterated through the artificial intelligence model until the sorting error rate of the target object is below the preset standard through the artificial intelligence model.

5. The system of claim 4, **characterized in that** data preprocessing is performed by giving priority to the components with high importance when applying the artificial intelligence model to another new waste disposal facility after identifying the importance of the components of the information of Image that affects the sorting result of the target object through iteration.
